(19) **Europäisches Patentamt European Patent Office Office européen des brevets**

(11) **EP 4 539 570 A1**

(12) **EUROPEAN PATENT APPLICATION**
published in accordance with Art. 153(4) EPC

(43) Date of publication:
**16.04.2025 Bulletin 2025/16**

(21) Application number: **23823084.1**

(22) Date of filing: **12.06.2023**

(51) International Patent Classification (IPC):
**H04W 72/04** (2023.01)

(52) Cooperative Patent Classification (CPC):
**H04W 24/08; H04W 72/04; H04W 72/044; H04W 72/0446; H04W 72/541**

(86) International application number:
**PCT/CN2023/099709**

(87) International publication number:
**WO 2023/241516 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.06.2022 CN 202210668003**

(71) Applicant: **ZTE Corporation**
**Shenzhen, Guangdong 518057 (CN)**

(72) Inventors:
- **WANG, Guoyan**
  **Shenzhen, Guangdong 518057 (CN)**

- **LI, Jianguo**
  **Shenzhen, Guangdong 518057 (CN)**
- **ZHOU, Xianwen**
  **Shenzhen, Guangdong 518057 (CN)**
- **ZHANG, Jinchao**
  **Shenzhen, Guangdong 518057 (CN)**
- **PANG, Lei**
  **Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **RESOURCE CONFIGURATION METHOD FOR SSB BEAMS, NETWORK DEVICE, TERMINAL DEVICE, AND STORAGE MEDIUM**

(57) Disclosed in the present application are a resource configuration method for SSB beams, a network device, a terminal device, and a storage medium. The resource configuration method for SSB beams comprises: acquiring interference situations of a plurality of SSB beams in a target area (S200); sorting the plurality of SSB beams according to the interference situations to obtain a time domain resource allocation order (S210); traversing and collecting statistics about time domain resources in the target area, and obtaining a plurality of time domain resource sequences according to the time domain resources, the interference situations and the time domain resource allocation order, wherein the time domain resource sequences and the SSB beams are in one-to-one correspondence (S220); and performing time domain resource allocation for the plurality of corresponding SSB beams according to the time domain resource sequences (S230).

FIG. 2

**Description**

**CROSS-REFERENCE TO RELATED APPLICATION**

This application is filed on the basis of Chinese patent application No. 202210668003.7 filed June 14, 2022, and claims priority to the Chinese patent application, the entire contents of which are incorporated herein by reference.

**TECHNICAL FIELD**

The present disclosure relates to the field of mobile communications, and more particularly, to a method for Synchronization Signal/PBCH Block (SSB) beam resource configuration, a network device, a terminal device, and a storage medium.

**BACKGROUND**

In New Radio (NR), the Synchronization Signal/PBCH Block (SSB) is introduced to transmit a synchronization signal and a broadcast channel as a bundle. NR also introduces SSB beam sweeping, where a plurality of SSBs are configured for a cell, and different SSBs are sent using narrow beams having different directions, and the plurality of SSBs jointly provide coverage of the entire cell. As the scale of 5th-Generation Mobile Communication Technology (5G) networks continuously increases, co-channel interference of 5G networks is becoming increasingly serious. Significant co-channel interference on SSBs affects user perception indicators, including access, handovers, and call drops.

**SUMMARY**

The following is a summary of the subject matter set forth in this description. This summary is not intended to limit the scope of protection of the claims.
The present disclosure provides a method for SSB beam resource configuration, a network device, a terminal device, and a storage medium.
In accordance with a first aspect of the present disclosure, an embodiment provides a method for SSB beam resource configuration, applied to a network device, the method including: acquiring interference statuses of a plurality of SSB beams in a target area; sorting the plurality of SSB beams according to the interference statuses to obtain a time domain resource allocation order; traversing and collecting statistics on time domain resources in the target area, and obtaining a plurality of time domain resource sequences according to the time domain resources, the interference statuses, and the time domain resource allocation order, where each of the time domain resource sequences corresponds to one SSB beam; and performing time domain resource allocation for the plurality of SSB beams according to the time domain resource sequences.
In accordance with a second aspect of the present disclosure, an embodiment provides a method for SSB beam resource configuration, applied to a terminal device, the method including: acquiring beam measurement information; and reporting the beam measurement information to a network device, such that the network device obtains a plurality of first signal strengths and a plurality of second signal strengths according to the beam measurement information, where each of the first signal strengths is a maximum signal strength among signal strengths of a plurality of SSB beams in a serving cell corresponding to a single terminal device, and each of the second signal strengths is a maximum signal strength among signal strengths of a plurality of SSB beams in a neighboring cell corresponding to the single terminal device, obtains time domain resource sequences according to the first signal strengths and the second signal strengths, and performs time domain resource allocation for the plurality of SSB beams in a target area according to the time domain resource sequences.
In accordance with a third aspect of the present disclosure, an embodiment provides a network device, including: a memory, a processor, and a computer program stored in the memory and executable by the processor, where the computer program, when executed by the processor, causes the processor to implement the method for SSB beam resource configuration in accordance with the first aspect.
In accordance with a fourth aspect of the present disclosure, an embodiment provides a terminal device, including: a memory, a processor, and a computer program stored in the memory and executable by the processor, where the computer program, when executed by the processor, causes the processor to implement the method for SSB beam resource configuration in accordance with the second aspect.
In accordance with a fifth aspect of the present disclosure, an embodiment provides a computer-readable storage medium, storing computer-executable instructions which, when executed by a computer, cause the computer to execute the method for SSB beam resource configuration in accordance with the first aspect and/or the second aspect.
Additional features and advantages of the present disclosure will be set forth in the description which follows, and in part will be apparent from the description, or may be learned by the practice of the present disclosure. The objects and other advantages of the present disclosure can be realized and obtained by the structures particularly pointed out in the description, claims and drawings.

## BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is a schematic diagram of a system architecture platform configured for executing a method for SSB beam resource configuration according to an embodiment of the present disclosure;

FIG. 2 is a flowchart of a method for SSB beam resource configuration according to an embodiment of the present disclosure;

FIG. 3 is a flowchart of a method for SSB beam resource configuration according to an embodiment of the present disclosure;

FIG. 4 is a flowchart of acquiring first interference statuses in a method for SSB beam resource configuration according to an embodiment of the present disclosure;

FIG. 5 is a flowchart of acquiring second interference statuses in a method for SSB beam resource configuration according to another embodiment of the present disclosure;

FIG. 6 is a flowchart of acquiring a time domain resource allocation order in a method for SSB beam resource configuration according to an embodiment of the present disclosure;

FIG. 7 is a flowchart of acquiring a time domain resource allocation order in a method for SSB beam resource configuration according to another embodiment of the present disclosure;

FIG. 8 is a flowchart of acquiring time domain resource sequences in a method for SSB beam resource configuration according to an embodiment of the present disclosure;

FIG. 9 is a flowchart of acquiring time domain resource sequences in a method for SSB beam resource configuration according to another embodiment of the present disclosure;

FIG. 10 is a flowchart of allocating time domain resources in a method for SSB beam resource configuration according to an embodiment of the present disclosure;

FIG. 11 is a flowchart of a method for SSB beam resource configuration according to another embodiment of the present disclosure; and

FIG. 12 is a schematic diagram of numbers of terminals corresponding to a first interference level between SSB beams according to an embodiment of the present disclosure.

## DETAILED DESCRIPTION

To make the objects, technical schemes, and advantages of the present disclosure clear, the present disclosure is described in further detail in conjunction with accompanying drawings and embodiments. It should be understood that the embodiments described herein are merely used for illustrating the present disclosure, and are not intended to limit the present disclosure.

In the description of the present disclosure, the term "at least one" means one or more, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

In the description of the present disclosure, unless otherwise explicitly defined, the terms such as "configure", "install/mount" and "connect" should be understood in a broad sense, and those having ordinary skills in the art can reasonably determine the meanings of the above terms in the present disclosure based on the contents of the technical scheme.

At present, in New Radio (NR), the Synchronization Signal/PBCH Block (SSB) is introduced to transmit a synchronization signal and a broadcast channel as a bundle. NR also introduces SSB beam sweeping, where a plurality of SSBs are configured for a cell, and different SSBs are sent using narrow beams having different directions, and the plurality of SSBs jointly provide coverage of the entire cell. As the scale of 5th-Generation Mobile Communication Technology (5G) networks continuously increases, co-channel interference of 5G networks is becoming increasingly serious. Significant co-channel interference on SSBs affects user perception indicators, including access, handovers, and call drops.

To address the problem that serious co-channel interference on SSBs affects user perception indicators, including access, handovers, and call drops, embodiments of the present disclosure provide a method for SSB beam resource configuration, a network device, a terminal device, and a storage medium. In the method, a network device acquires interference statuses of a plurality of SSB beams in a target area; sorts the plurality of SSB beams according to the interference statuses to obtain a time domain resource allocation order; traverses and collects statistics on time domain resources in the target area, and obtains a plurality of time domain resource sequences according to the time domain resources, the interference statuses, and the time domain resource allocation order, where each of the time domain resource sequences corresponds to one SSB beam; and performs time domain resource allocation for the plurality of SSB beams according to the time domain resource sequences. The terminal device acquires beam measurement information; and reports the beam measurement information to the network device, such that the network device obtains a plurality of first signal strengths and a plurality of second signal strengths according to the beam measurement information, where each of the first signal strengths is a maximum signal strength among signal strengths of a plurality of SSB beams in a serving cell corresponding to a single terminal device, and each of the second signal strengths is a maximum signal strength among signal strengths of a plurality of SSB beams in a neighboring cell corresponding to the single terminal device, obtains time domain resource sequences according to the first signal strengths and the second signal strengths, and performs time domain resource allocation for the plurality of SSB beams in a target area according to the time domain resource sequences. The terminal device acquires beam measurement information, and the network device obtains a plurality of first signal strengths and a plurality of second signal strengths according to the beam measurement information, acquires interference statuses of a plurality of SSB beams in a target area according to the plurality of first signal strengths and the plurality of second signal strengths, and sorts the plurality of SSB beams according to the interference statuses to obtain a time domain resource allocation order, i.e., an SSB beam optimization order. As such, the SSB beam with serious interference is preferentially optimized, so as to effectively improve user experience. The network device obtains a plurality of time domain resource sequences according to the time domain resources, the interference statuses, and the time domain resource allocation order, and performs time domain resource allocation for the SSB beams according to the time domain resource sequences. In this way, interference between SSB beams can be effectively reduced, thereby improving user experience and reducing the overall processing complexity.

The embodiments of the present disclosure will be further described in detail below in conjunction with the accompanying drawings.

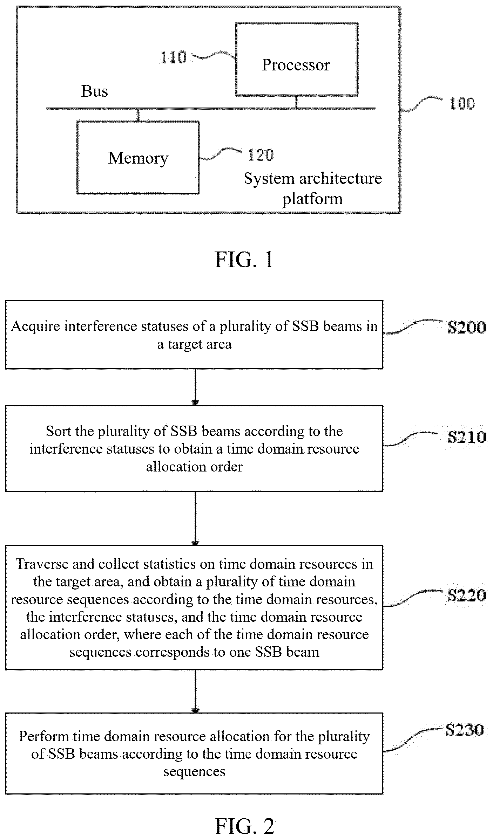

FIG. 1 is a schematic diagram of a system architecture platform configured for executing a method for SSB beam resource configuration according to an embodiment of the present disclosure.

The system architecture platform 100 according to the embodiment of the present disclosure includes one or more processors 110 and memories 120. FIG. 1 uses one processor 110 and one memory 120 as an example.

The processor 110 and the memory 120 may be connected by a bus or in other ways. Connection by a bus is used as an example in FIG. 1.

The memory 120, as a non-transitory computer-readable storage medium, may be configured for storing a non-transitory software program and a non-transitory computer-executable program. In addition, the memory 120 may include a high-speed random access memory, and may also include a non-transitory memory, e.g., at least one magnetic disk storage device, flash memory device, or other non-transitory solid-state storage device. In some implementations, the memory 120 may include memories located remotely from the processor 110, and the remote memories may be connected to the system architecture platform 100 via a network. Examples of the network include, but not limited to, the Internet, an intranet, a local area network, a mobile communication network, and combinations thereof.

Those having ordinary skills in the art may understand that the apparatus structure shown in FIG. 1 does not constitute a limitation to the system architecture platform 100, and more or fewer components than those shown in the figure may be included, or some components may be combined, or a different component arrangement may be used.

FIG. 2 is a flowchart of a method for SSB beam resource configuration according to an embodiment of the present disclosure. The method for SSB beam resource configuration of the embodiment of the present disclosure includes, but not limited to, the following steps S200, S210, S220, and S230.

At S200, interference statuses of a plurality of SSB beams in a target area are acquired.

At S210, the plurality of SSB beams are sorted according to the interference statuses to obtain a time domain resource allocation order.

At S220, time domain resources in the target area are traversed, statistics on the time domain resources in the target area are collected, and a plurality of time domain resource sequences are obtained according to the time domain resources, the interference statuses, and the time domain resource allocation order, where each of the time domain resource sequences corresponds to one SSB beam.

At S230, time domain resource allocation is performed for the plurality of SSB beams according to the time domain resource sequences.

In this embodiment, the method for SSB beam resource configuration is applied to a network device. The network device acquires interference statuses of a plurality of SSB beams in a target area, where the interference status of each of the SSB beams includes, but not limited to, a sum of interference caused an SSB beam to other SSB beams and interference caused by other SSB beams to the SSB beam; sorts the plurality of SSB beams according to the interference statuses of the SSB beams to obtain a time domain resource allocation order, i.e., an SSB beam optimization order, where the SSB beam with most serious SSB interference is to be optimized preferentially; traverses and collects statistics on time domain resources in the target area, and obtains a plurality of time domain resource sequences according to the time domain resources, the interference statuses, and the time domain resource allocation order, where each of the time domain resource sequences corresponds to one SSB beam; and performs time domain resource allocation for the plurality of SSB beams according to the time domain resource sequences. The SSB beam optimization order is determined according to the time domain resource allocation order, a plurality of time domain resource sequences are obtained according to the time domain resources, the interference statuses, and the time domain resource allocation order, and an optimal time domain resource is selected from the time domain resource sequences and allocated to the SSB beam. In this way, the user experience is improved and the processing complexity of the entire method for SSB beam resource configuration is reduced.

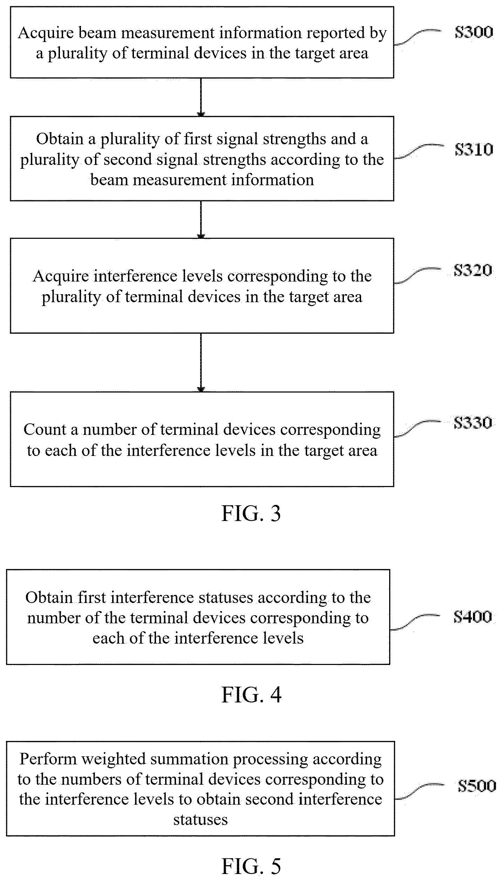

FIG. 2 and FIG. 3. FIG. 3 is a flowchart of a method for SSB beam resource configuration according to an embodiment of the present disclosure. The method for SSB beam resource configuration of the embodiment of the present disclosure includes, but not limited to, the following steps S300, S310, S320, and S330.

At S300, beam measurement information reported by a plurality of terminal devices in the target area is acquired.

At S310, a plurality of first signal strengths and a plurality of second signal strengths are obtained according to the beam measurement information.

At S320, interference levels corresponding to the plurality of terminal devices in the target area are acquired.

At S330, a number of terminal devices corresponding to each of the interference levels in the target area is counted.

In this embodiment, the target area includes a plurality of cells, and the cells include a serving cell and a neighboring cell. Before acquiring interference statuses of a plurality of SSB beams in a target area at S200, the network device acquires beam measurement information reported by a plurality of terminal devices in the target area, where the beam measurement information reported by each of the terminal devices includes signal strengths of a plurality of the SSB beams in the serving cell corresponding to the terminal device and signal strengths of a plurality of SSB beams in the neighboring cell corresponding to the terminal device; obtains a plurality of first signal strengths and a plurality of second signal strengths according to the beam measurement information, where each of the first signal strengths is a maximum signal strength among the signal strengths of the plurality of SSB beams in the serving cell corresponding to a single terminal device, and each of the second signal strengths is a maximum signal strength among the signal strengths of the plurality of SSB beams in the neighboring cell corresponding to the single terminal device; acquires interference levels corresponding to the plurality of terminal devices in the target area, where the interference level corresponding to each of the terminal devices is determined according to a difference between the first signal strength and the second signal strength corresponding to the terminal device; and counts a number of terminal devices corresponding to each of the interference levels in the target area.

In this embodiment, serving SSB beams of a single terminal device are SSB beams corresponding to the first signal strengths of the terminal device, and neighboring-cell SSB beams of a single terminal device are SSB beams corresponding to the second signal strengths of the terminal device.

In some embodiments, the network device acquires beam measurement information reported by a single terminal device, selects a beam having highest signal strength from a plurality of SSB beams in a serving cell in the beam measurement information as a serving SSB beam i, and records the signal strength of the serving SSB beam i as a first signal strength corresponding to the terminal device. The network device traverses a plurality of neighboring cells of the serving cell corresponding to the beam measurement information reported by the terminal device, acquires beam measurement information of each of the neighboring cells reported by the terminal device, selects a beam having highest signal strength from a plurality of SSB beams in the neighboring cell in the SSB beam measurement information of the neighboring cell as a neighboring-cell SSB beam j, and records the signal strength of the neighboring-cell SSB beam j as a second signal strength corresponding to the terminal device. The network device calculates a difference between the first signal strength and the second signal strength corresponding to the terminal device, where the difference is defined as $SigDiff(i,j)$. The network device presets a plurality of difference thresholds $[thrd_1, thrd_2, \cdots, thrd_N]$, and determines an interference level corresponding to the terminal device according to the difference and the difference thresholds. When $SigDiff(i,j) \in (thrd_3, thrd_4]$, the interference level corresponding to the terminal device is determined to be a fourth interference level. Similarly, the network device acquires beam measurement information reported by a plurality of terminal devices in the target area, obtains a plurality of first signal strengths and a plurality of second signal strengths according to the beam measurement information, acquires interference levels corresponding to the plurality of terminal devices in the target area, and counts the number of terminal devices corresponding to each interference level in the target area. When n is 1, $SigDiff(i,j) \le thrd_1$, and the interference level corresponding to the terminal device is determined to be a first interference level. When n is greater than or equal to 2, $SigDiff(i,j) \in (thrd_{n-1}, thrd_n]$, and the interference level corresponding to the terminal device is determined to be an $n^{th}$ interference level. The number of terminal devices corresponding to the $n^{th}$ interference level is defined as $IntCount(i,j,n)$, and the number of terminal devices corresponding to each of the interference levels is defined as $IntCount(i,j,n)$, $n \in [1,2,\cdots N]$.

FIG. 2, FIG. 3, and FIG. 4. FIG. 4 is a flowchart of acquiring first interference statuses in a method for SSB beam resource configuration according to an embodiment of the present disclosure. The method for SSB beam resource configuration of the embodiment of the present disclosure includes, but not limited to, a following step S400.

At S400, first interference statuses are obtained according to the number of the terminal devices corresponding to each of the interference levels.

In the present disclosure, the target area includes a plurality of cells, and the plurality of cells include a serving cell and a neighboring cell. The interference status of each of the SSB beams includes, but not limited to, a sum of interference caused an SSB beam to other SSB beams and interference caused by other SSB beams to the SSB beam. The interference status of the SSB beam may be represented in two manners. One manner of representation is to count an interference sample size corresponding to each interference level, i.e., the first interference statuses in this embodiment. Each of the first interference statuses is an interference status of a single SSB beam corresponding to the interference level. The network device traverses a plurality of neighboring-cell SSB beams j of the terminal device corresponding to a single SSB beam i serving as the serving SSB beam i, obtains a neighboring-cell SSB beam set of the terminal device through statistics, and obtains, according to the neighboring-cell SSB beam set and the number of terminal devices corresponding to each of the interference levels, an interference status of interference caused by the plurality of SSB beams j to the SSB beam i at each of the interference levels. The network device traverses a plurality of serving SSB beams j of the terminal device corresponding to the SSB beam i serving as a neighboring-cell SSB beam i, obtains a serving SSB beam set of the terminal device through statistics, and obtains, according to the serving SSB beam set and the number of terminal devices corresponding to each of the interference levels, an interference status of interference caused by the SSB beam i to the plurality of SSB beams j at each of the interference levels. The network device obtains the first interference status according to a sum of the interference status of the interference caused by the plurality of SSB beams j to the SSB beam i at each of the interference levels and the interference status of the interference caused by the SSB beam i to the plurality of SSB beams j at each of the interference levels.

In some embodiments, the number of terminal devices corresponding to each of the interference levels is defined as $IntCount(i,j,n)$, $n \in [1,2,\cdots N]$, which may also be understood as an interference status of interference caused by one neighboring-cell SSB beam j to one serving SSB beam i at each of the interference levels. Similarly, an interference status of interference caused by one neighboring-cell SSB beam i to one serving SSB beam j at each of the interference levels is defined as $IntCount(j,i,n)$, $n \in [1,2,\cdots N]$. Each of the first interference statuses is an interference status of a single SSB beam corresponding to the interference level, i.e., a sum of an interference status of interference caused by a plurality of neighboring-cell SSB beams j to one serving SSB beam i at each of the interference levels and an interference status of interference caused by one neighboring-cell SSB beam i to a plurality of serving SSB beams j at each of the interference levels. The network device traverses a plurality of neighboring-cell SSB beams j of the terminal device corresponding to the SSB beam i serving as the serving SSB beam i, and obtains a neighboring-cell SSB beam set of the terminal device through statistics, where the neighboring-cell SSB beam set is defined as $S_{neibSSB}$; and traverses a plurality of serving SSB beams j of the terminal device corresponding to the SSB beam i serving as a neighboring-cell SSB beam i, and obtains a serving SSB beam set of the terminal device through statistics, where the serving SSB beam set is defined as $S_{servSSB}$. An interference status of interference caused by a plurality of neighboring-cell SSB beams j to one serving SSB beam i at each of the interference levels is defined as
$$IntCount\_to(i, n) = \sum_{j \in S_{neibSSB}} IntCount(i, j, n)$$
. An interference status of interference caused by one neighboring-cell SSB beam i to a plurality of serving SSB beams j at each of the interference levels is defined as
$$IntCount\_from(i, n) = \sum_{j \in S_{servSSB}} IntCount(j, i, n)$$
. Therefore, the interference status of a single SSB beam i corresponding to each interference level is defined as:

$$IntCount\_total(i,n) = IntCount\_to(i,n) + IntCount\_from(i,n).$$

The first interference status is also defined as *IntCount_total(i,n) = IntCount_to(i,n) + IntCount_from(i,n)*.

FIG. 2, FIG. 3, and FIG. 5. FIG. 5 is a flowchart of acquiring second interference statuses in a method for SSB beam resource configuration according to another embodiment of the present disclosure. The method for SSB beam resource configuration of the embodiment of the present disclosure includes, but not limited to, a following step S500.

At S500, weighted summation processing is performed according to the numbers of terminal devices corresponding to the interference levels to obtain second interference statuses.

In the present disclosure, the target area includes a plurality of cells, and the plurality of cells include a serving cell and a neighboring cell. The interference status of each of the SSB beams includes, but not limited to, a sum of interference caused by an SSB beam to other SSB beams and interference caused by other SSB beams to the SSB beam. The interference status of the SSB beam may be represented in two manners. One manner of representation is to perform weighted summation of interference sample sizes corresponding to the interference levels to obtain an average interference sample size, i.e., the second interference statuses in this embodiment. Each of the second interference statuses is an average interference status of a single SSB beam corresponding to all the interference levels. The network device performs weighted summation processing according to the numbers of terminal devices corresponding to the interference levels to obtain the second interference statuses. Each of the interference levels corresponds to one weight parameter. The network device traverses a plurality of neighboring-cell SSB beams j of the terminal device corresponding to a single SSB beam i serving as the serving SSB beam i, obtains a neighboring-cell SSB beam set of the terminal device through statistics, and performs weighted summation processing according to the neighboring-cell SSB beam set, the number of terminal devices corresponding to each of the interference levels, and the weight parameter corresponding to each of the interference levels to obtain an average interference status of interference caused by a plurality of SSB beams j to one SSB beam i at all the interference levels. The network device traverses a plurality of serving SSB beams j of the terminal device corresponding to the SSB beam i serving as a neighboring-cell SSB beam i, obtains a serving SSB beam set of the terminal device through statistics, and performs weighted summation processing according to the serving SSB beam set, the number of terminal devices corresponding to each of the interference levels, and the weight parameter corresponding to each of the interference levels to obtain an average interference status of interference caused by one SSB beam i to a plurality of SSB beams j at all the interference levels. The network device obtains the second interference status according to the average interference status of the interference caused by the plurality of SSB beams j to the SSB beam i at all the interference levels and the average interference status of the interference caused by the SSB beam i to the plurality of SSB beams j at all the interference levels.

In some embodiments, the number of terminal devices corresponding to each of the interference levels is defined as *IntCount(i,j,n)*, $n \in [1,2,\cdots N]$, each of the interference levels corresponds to one weight parameter $[\alpha_1, \alpha_2, \cdots \alpha_N]$, and weighting processing is performed according to the number of terminal devices corresponding to each of the interference

$$IntCount\,(j,i) = \sum_{n \in [1,2,\cdots N]} \alpha_n * IntCount\,(i,j,n)$$

levels to obtain , which is understood as an average interference status of interference caused by one neighboring-cell SSB beam j to one serving SSB beam i at all interference levels. Similarly, an average interference status of interference caused by one neighboring-cell SSB beam i to one serving SSB beam j at all the interference levels is defined as

$$IntCount\,(i,j) = \sum_{n \in [1,2,\cdots N]} \alpha_n * IntCount\,(j,i,n)$$

. Each of the second interference statuses is an average interference status of a single SSB beam corresponding to all the interference levels, i.e., a sum of an average interference status of interference caused by a plurality of neighboring-cell SSB beams j to one serving SSB beam i at all the interference levels and an average interference status of interference caused by one neighboring-cell SSB beam i to a plurality of serving SSB beams j at all the interference levels. The network device traverses a plurality of neighboring-cell SSB beams j of the terminal device corresponding to the SSB beam i serving as the serving SSB beam i, and obtains a neighboring-cell SSB beam set of the terminal device through statistics, where the neighboring-cell SSB beam set is defined as $S_{neibSSB}$; and traverses a plurality of serving SSB beams j of the terminal device corresponding to the SSB beam i serving as a neighboring-cell SSB beam i, and obtains a serving SSB beam set of the terminal device through statistics, where the serving SSB beam set is defined as $S_{servSSB}$. An average interference status of interference caused by a plurality of neighboring-cell SSB beams j to one serving SSB beam i at all the interference levels is defined as

$$IntCount\_to(i) = \sum_{j \in S_{neibSSB}} IntCount(i, j)$$

. An average interference status of interference caused by one neighboring-cell SSB beam i to a plurality of serving SSB beams j at all the interference levels is defined as

$$IntCount\_from(i) = \sum_{j \in S_{servSSB}} IntCount(j, i)$$

. Therefore, the average interference status of a single SSB beam i corresponding to all the interference levels is defined as:

$$IntCount\_total(i) = IntCount\_to(i) + IntCount\_from(i).$$

The second interference status is also defined as *IntCount_total*(*i*) = *IntCount_to*(*i*) + *IntCount_from*(*i*).

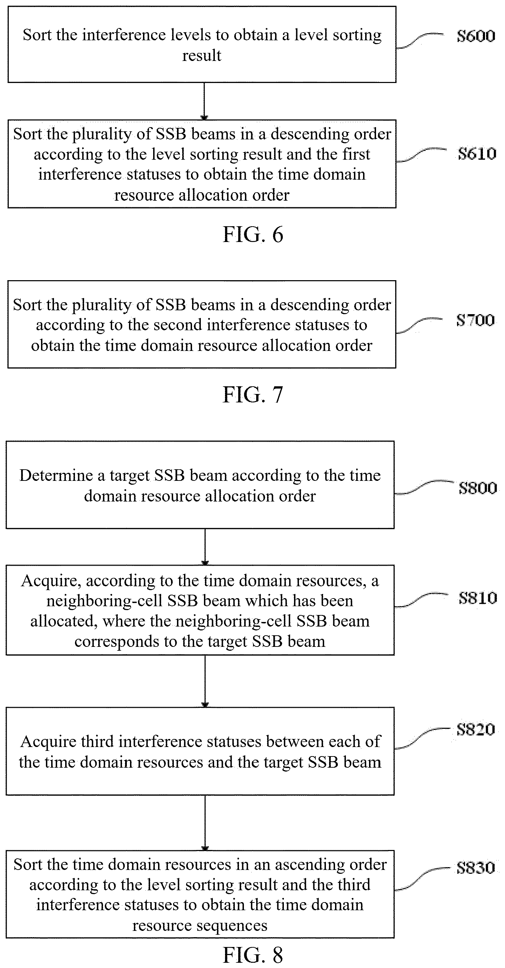

FIG. 6 is a flowchart of acquiring a time domain resource allocation order in a method for SSB beam resource configuration according to an embodiment of the present disclosure. The method for SSB beam resource configuration of the embodiment of the present disclosure includes, but not limited to, the following steps S600 and S610.

At S600, the interference levels are sorted to obtain a level sorting result.

At S610, the plurality of SSB beams are sorted in a descending order according to the level sorting result and the first interference statuses to obtain the time domain resource allocation order.

In this embodiment, the interference levels are sorted to obtain a level sorting result. It should be noted that the level sorting result includes a first level sorting result in a descending order and a second level sorting result in an ascending order. In this embodiment, the level sorting result is the first level sorting result in a descending order. The plurality of SSB beams are sorted in a descending order according to the level sorting result and the first interference statuses to obtain the time domain resource allocation order, i.e., the plurality of SSB beams are sorted in a descending order according to the first level sorting result and the first interference statuses to obtain the time domain resource allocation order. The SSB beam with serious interference is determined and is preferentially improved, thereby improving user experience.

In addition, it should be noted that if the first interference statuses of the plurality of SSB beams corresponding to a first interference level is the same, the plurality of SSB beams are sorted in a descending order according to the first interference statuses corresponding to a second interference level, where the second interference level is lower than the first interference level.

In some embodiments, the interference levels are sorted in a descending order; and the SSB beams in the target area are sorted in a descending order of the first interference statuses *IntCount_total*(*i*,1) corresponding to the first interference level, and if the first interference statuses *IntCount_total*(*i,1*) of two or more SSB beams corresponding to the first interference level are the same, the two or more SSB beams are sorted in a descending order of the first interference statuses *IntCount_total*(*i,2*) corresponding to the second interference level, where the second interference level is lower than the first interference level. Similarly, the operations are performed, to finally obtain the time domain resource allocation order.

FIG. 7 is a flowchart of acquiring a time domain resource allocation order in a method for SSB beam resource configuration according to another embodiment of the present disclosure. The method for SSB beam resource configuration of the embodiment of the present disclosure includes, but not limited to, a following step S700.

At S700, the plurality of SSB beams are sorted in a descending order according to the second interference statuses to obtain the time domain resource allocation order.

In this embodiment, because each of the second interference statuses is an average interference status of a single SSB beam corresponding to all the interference levels, and the calculation of the second interference statuses already involves weighted processing for the interference levels, the plurality of SSB beams are directly sorted in a descending order according to the second interference statuses to obtain the time domain resource allocation order, i.e., the SSB beams in the target area are sorted in a descending order of the second interference statuses *IntCount_total*(*i*).

FIG. 8 is a flowchart of acquiring time domain resource sequences in a method for SSB beam resource configuration according to an embodiment of the present disclosure. The method for SSB beam resource configuration of the embodiment of the present disclosure includes, but not limited to, the following steps S800, S810, S820, and S830.

At S800, a target SSB beam is determined according to the time domain resource allocation order.

At S810, a neighboring-cell SSB beam which has been allocated is acquired according to the time domain resources, where the neighboring-cell SSB beam corresponds to the target SSB beam.

At S820, third interference statuses between each of the time domain resources and the target SSB beam are acquired.

At S830, the time domain resources are sorted in an ascending order according to the level sorting result and the third interference statuses to obtain the time domain resource sequences.

In this embodiment, the network device determines a target SSB beam according to the time domain resource allocation order, traverses the time domain resources, and acquires a neighboring-cell SSB beam which has been allocated, where the neighboring-cell SSB beam corresponds to the target SSB beam. The network device acquires third interference statuses between each of the time domain resources and the target SSB beam, where the third interference statuses are interference statuses between the target SSB beam and the neighboring-cell SSB beam which has been allocated in the time domain resources at the interference levels. The network device sorts the time domain resources in an ascending order according to the level sorting result and the third interference statuses to obtain the time domain resource sequences. It should be noted that the level sorting result includes a first level sorting result in a descending order and a second level sorting result in an ascending order. In this embodiment, the level sorting result is the second level sorting result in an ascending order. The sorting of the interference levels in an ascending order is for the purpose of obtaining a time domain resource sequence with lowest interference.

In addition, it should be noted that if a plurality of third interference statuses corresponding to a second interference level is the same, the plurality of time domain resources are sorted in an ascending order according to the third interference statuses corresponding to a first interference level, where the second interference level is lower than the first interference level.

In some embodiments, the number of terminal devices corresponding to each of the interference levels is defined as $IntCount(i,j,n)$, $n \in [1,2,\cdots N]$, which may also be understood as an interference status of interference caused by one neighboring-cell SSB beam j to one serving SSB beam i at each of the interference levels. Similarly, an interference status of interference caused by one neighboring-cell SSB beam i to one serving SSB beam j at each of the interference levels is defined as $IntCount(j,i,n)$, $n \in [1,2,\cdots N]$. An interference status of interference between one SSB beam i and one SSB beam j at each of the interference levels, i.e., a sum of an interference status of interference caused by one neighboring-cell SSB beam j to one serving SSB beam i at each of the interference levels and an interference status of interference caused by one neighboring-cell SSB beam i to one serving SSB beam j at each of the interference levels, is defined as $IntCount\_pair(i,j,n) = IntCount(i,j,n) + IntCount(j, i, n)$, $n \in [1,2,\cdots N]$.

In some embodiments, the network device determines a target SSB beam i according to the time domain resource allocation order, traverses the time domain resources, acquires a set $Sssb, x$ of neighboring-cell SSB beams j having been allocated on a time domain resource x, and acquires third interference statuses between each of the time domain resources and the target SSB beam i, i.e., acquires interference statuses between the neighboring-cell SSB beams j having been allocated on the time domain resource x and the target SSB beam i at each interference level, where the third interference statuses are defined as:

$$IntCount\_pair(i, x, n) = \sum_{j \in Sssb,x} IntCount\_pair(i, j, n).$$

The network device sorts the interference levels in an ascending order. The time domain resources are sorted in an ascending order of the third interference statuses $IntCount\_pair(i, x, 2)$ corresponding to the second interference level, and if the third interference statuses $IntCount\_pair(i,x, 2)$ of two or more time domain resources corresponding to the second interference level are the same, the two or more time domain resources are sorted in an ascending order of the third interference statuses $IntCount\_pair(i, x,1)$ corresponding to the first interference level, where the second interference level is lower than the first interference level. Similarly, the operations are performed, to finally obtain time domain resource sequences $Seq$.

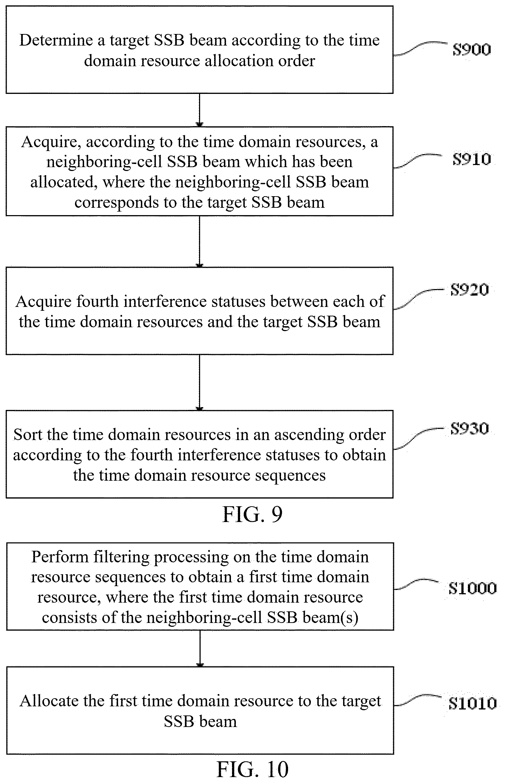

FIG. 9 is a flowchart of acquiring time domain resource sequences in a method for SSB beam resource configuration according to another embodiment of the present disclosure. The method for SSB beam resource configuration of the embodiment of the present disclosure includes, but not limited to, the following steps S900, S910, S920, and S930.

At S900, a target SSB beam is determined according to the time domain resource allocation order.

At S910, a neighboring-cell SSB beam which has been allocated is acquired according to the time domain resources, where the neighboring-cell SSB beam corresponds to the target SSB beam.

At S920, fourth interference statuses between each of the time domain resources and the target SSB beam are acquired.

At S930, the time domain resources are sorted in an ascending order according to the fourth interference statuses to obtain the time domain resource sequences.

In this embodiment, the network device determines a target SSB beam according to the time domain resource allocation order, traverses the time domain resources, and acquires a neighboring-cell SSB beam which has been allocated, where the neighboring-cell SSB beam corresponds to the target SSB beam; acquires fourth interference statuses between each of the time domain resources and the target SSB beam, where the fourth interference statuses are average interference statuses between the target SSB beam and the neighboring-cell SSB beam which has been allocated in the time domain resources at all the interference levels; and sorts the time domain resources in an ascending order according to the fourth interference statuses to obtain the time domain resource sequences. The sorting of the fourth interference statuses in an ascending order is for the purpose of obtaining a time domain resource sequence with lowest interference.

In some embodiments, the number of terminal devices corresponding to each of the interference levels is defined as IntCount(i,j,n), $n \in [1,2,\cdots N]$, each of the interference levels corresponds to one weight parameter $[\alpha_1, \alpha_2, \cdots \alpha_N]$, and weighting processing is performed according to the number of terminal devices corresponding to each of the interference

$$IntCount\left(j, i\right) = \sum_{n \in \left[1,2,\cdots N\right]} \alpha_n * IntCount\left(i, j, n\right)$$

levels to obtain , which is understood as an average interference status of interference caused by one neighboring-cell SSB beam j to one serving SSB beam i at all interference levels. Similarly, an average interference status of interference caused by one neighboring-cell SSB beam i to one serving SSB beam j at all the interference levels is defined as

$$IntCount\left(i, j\right) = \sum_{n \in \left[1,2,\cdots N\right]} \alpha_n * IntCount\left(j, i, n\right)$$

. An average interference status between one SSB beam i and one SSB beam j at all the interference levels, i.e., a sum of an average interference status of interference caused by one neighboring-cell SSB beam j to one serving SSB beam i at all the interference levels and an average interference status of interference caused by one neighboring-cell SSB beam i to one serving SSB beam j at all the interference levels, is defined as IntCount_pair(i,j) = IntCount(i,j) + IntCount(j,i).

In some embodiments, the network device determines a target SSB beam i according to the time domain resource allocation order, traverses the time domain resources, and acquires a set Sssb, x of neighboring-cell SSB beams j having been allocated on the time domain resource x; acquires fourth interference statuses between each of the time domain resources and the target SSB beam i, i.e., acquires an average interference status between the neighboring-cell SSB beams j having been allocated on the time domain resource x and the target SSB beam i at all the interference levels, where the fourth interference statuse is defined as:

$$IntCount \_ pair\left(i, x\right) = \sum_{j \in Sssb,x} IntCount \_ pair\left(i, j\right)$$
, and

sorts the time domain resources in an ascending order of the fourth interference statuses IntCount _ pair(i, x) to obtain the time domain resource sequences Seq.

FIG. 10 is a flowchart of allocating time domain resources in a method for SSB beam resource configuration according to an embodiment of the present disclosure. The method for SSB beam resource configuration of the embodiment of the present disclosure includes, but not limited to, the following steps S1000 and S1010.

At S1000, filtering processing is performed on the time domain resource sequences to obtain a first time domain resource, where the first time domain resource consists of the neighboring-cell SSB beam(s).

At S1010, the first time domain resource is allocated to the target SSB beam.

In this embodiment, the network device performs filtering processing on the time domain resource sequences to obtain a first time domain resource, where the first time domain resource consists of the neighboring-cell SSB beam(s). In this way, interference between SSB beams can be effectively reduced, thereby improving user experience.

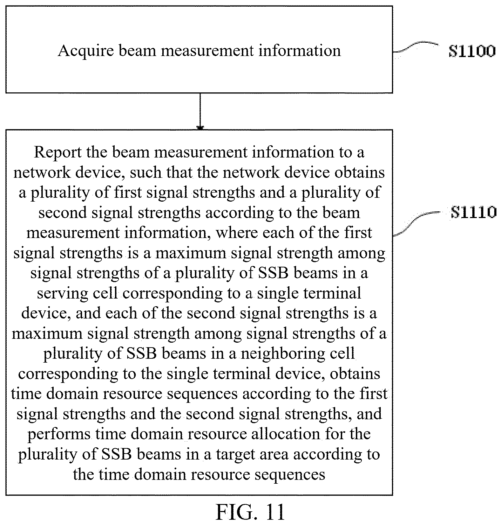

FIG. 11 is a flowchart of a method for SSB beam resource configuration according to another embodiment of the present disclosure. The method for SSB beam resource configuration of the embodiment of the present disclosure includes, but not limited to, the following steps S1100 and S1110.

At S1100, beam measurement information is acquired.

At S1110, the beam measurement information is reported to a network device, such that the network device obtains a plurality of first signal strengths and a plurality of second signal strengths according to the beam measurement information, where each of the first signal strengths is a maximum signal strength among signal strengths of a plurality of SSB beams in a serving cell corresponding to a single terminal device, and each of the second signal strengths is a maximum signal strength among signal strengths of a plurality of SSB beams in a neighboring cell corresponding to the single terminal device, obtains time domain resource sequences according to the first signal strengths and the second signal strengths, and performs time domain resource allocation for the plurality of SSB beams in a target area according to the time domain resource sequences.

In this embodiment, the method for SSB beam resource configuration is applied to a terminal device. The terminal device acquires beam measurement information and reports the beam measurement information to a network device, such that the network device obtains a plurality of first signal strengths and a plurality of second signal strengths according to the beam measurement information, where each of the first signal strengths is a maximum signal strength among the signal strengths of the plurality of SSB beams in the serving cell corresponding to a single terminal device, and each of the second signal strengths is a maximum signal strength among the signal strengths of the plurality of SSB beams in the neighboring cell corresponding to the single terminal device; acquires interference statuses of a plurality of SSB beams in a target area according to the plurality of first signal strengths and the plurality of second signal strengths; sorts the plurality of SSB beams according to the interference statuses to obtain a time domain resource allocation order; traverses and collects statistics on time domain resources in the target area, and obtains a plurality of time domain resource sequences according to the time domain resources, the interference statuses, and the time domain resource allocation order; and performs time domain resource allocation for the plurality of SSB beams according to the time domain resource sequences.

In addition, in some embodiments, it is assumed that there are three cells in the target area, and each cell has eight SSB beams, occupying time domain resources [s0, s1, ..., s7]. The 24 SSB beams are numbered 0 to 23.

The network device determines a beam having highest signal strength in the beam measurement information reported in the serving cell by the terminal device as a serving SSB beam, and records the signal strength of the serving SSB beam as the first signal strength. The network device traverses all the neighboring cells involved in the beam measurement information, determines a beam having highest signal strength in the beam measurement information of the neighboring cells reported by the terminal device as a neighboring-cell SSB beam, and records the signal strength of the neighboring-cell SSB beam as a second signal strength.

The network device selects a terminal device that uses the SSB beam i as the serving SSB beam and the SSB beam j as the neighboring-cell SSB beam; calculates a difference between the first signal strength corresponding to the serving SSB beam i and the second signal strength corresponding to the neighboring-cell SSB beam j for the terminal device, where the difference is defined as *SigDiff(i,j)*;

sets two difference thresholds [$thrd_1$,$thrd_2$] = [6,30]; counts a number of terminal devices satisfying $SigDiff(i,j) \leq thrd_1$, i.e., a number of terminal devices corresponding to the first interference level, defined as *IntCount(i,j, 1)*; and counts a number of terminal devices satisfying $thrd_1 < SigDiff(i,j) \leq thrd_2$, i.e., a number of terminal devices corresponding to the second interference level, defined as *IntCount(i,j,2)*.

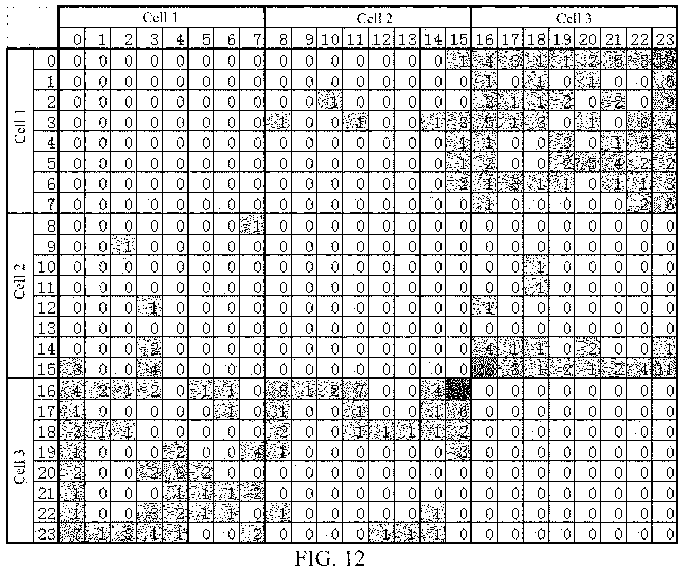

FIG. 12 is a schematic diagram of numbers *IntCount(i,j,*1) of terminal devices corresponding to a first interference level between SSB beams according to an embodiment of the present disclosure.

Statistics are collected on the interference status of the SSB beam i corresponding to each interference level, i.e., the first interference status:

$$IntCount\_total(i, n) = \sum_{j=[0,1,\cdots,23], j \neq i} IntCount(i, j, n) + \sum_{j=[0,1,\cdots,23], j \neq i} IntCount(j, i, n), n = [1,2]$$

The 24 SSB beams are sorted in a descending order of the first interference statuses *IntCount_total(i,*1) corresponding to the first interference level, and if the first interference statuses *IntCount_total(i,*1) of two or more SSB beams corresponding to the first interference level are the same, the two or more SSB beams are sorted in a descending order of the first interference statuses *IntCount_total(i,*2) corresponding to the second interference level, to obtain the time domain resource allocation order, where the second interference level is lower than the first interference level.

A target SSB beam i is determined according to the time sequence resource allocation order, and statistics are collected on interference statuses between neighboring-cell SSB beams j having been allocated on eight time domain resources and the target SSB beam i at each interference level, i.e., the third interference statuses:

$$IntCount\_pair(i, x, n) = \sum_{j \in Sssb,x} IntCount\_pair(i, j, n)$$

*IntCount_pair(i,j, n) = IntCount(i,j, n) + IntCount(j, i, n), Sssb, x* is a set of neighboring-cell SSB beams j having been allocated on the time domain resource x, *n* = [1,2], and *x* = [s0, s1, ···, s7].

The eight time domain resources are sorted in an ascending order of the third interference statuses *IntCount_pair(i,x,*2) corresponding to the second interference level, and if the third interference statuses *IntCount_pair(i,x,*2) of two or more time domain resources corresponding to the second interference level are the same, the two or more time domain resources are sorted in an ascending order of the third interference statuses *IntCount_pair(i, x, 1)* corresponding to the first interference level, to obtain time domain resource sequences *Seq*. A first time domain resource which has not been occupied by the cell to which the target SSB beam i belongs in the time domain resource sequences *Seq* is selected and allocated to the target SSB beam i.

In addition, in some embodiments, it is assumed that there are three cells in the target area, and each cell has eight SSB beams, occupying time domain resources [s0, s1, ..., s7]. The 24 SSB beams are numbered 0 to 23.

The network device determines a beam having highest signal strength in the beam measurement information reported in the serving cell by the terminal device as a serving SSB beam, and records the signal strength of the serving SSB beam as the first signal strength. The network device traverses all the neighboring cells involved in the beam measurement information, determines a beam having highest signal strength in the beam measurement information of the neighboring cells reported by the terminal device as a neighboring-cell SSB beam, and records the signal strength of the neighboring-cell SSB beam as a second signal strength.

The network device selects a terminal device that uses the SSB beam i as the serving SSB beam and the SSB beam j as the neighboring-cell SSB beam; calculates a difference between the first signal strength corresponding to the serving SSB beam i and the second signal strength corresponding to the neighboring-cell SSB beam j for the terminal device, where the difference is defined as *SigDiff(i,j)*;

sets two difference thresholds $[thrd_1, thrd_2] = [6, 30]$; counts a number of terminal devices satisfying $SigDiff(i,j) \leq thrd_1$, i.e., a number of terminal devices corresponding to the first interference level, defined as *IntCount(i,j, 1)*; and counts a number of terminal devices satisfying $thrd_1 < SigDiff(i,j) \leq thrd_2$, i.e., a number of terminal devices corresponding to the second interference level, defined as *IntCount(i,j, 2)*, where each of the difference thresholds corresponds to one weight coefficient. An average interference status of interference caused by one neighboring-cell SSB beam j to one serving SSB beam i at all the interference levels is defined as:

$$IntCount(i, j) = \sum_{n \in [1,2]} \alpha_n * IntCount(i, j, n)$$

Statistics are collected on the average interference status of the SSB beam i corresponding to all the interference levels, i.e., the second interference status:

$$IntCount\_total(i) = \sum_{j=[0,1,\cdots,23], j \neq i} IntCount(i, j) + \sum_{j=[0,1,\cdots,23], j \neq i} IntCount(j, i)$$

The 24 SSB beams are sorted in a descending order of *IntCount_total(i)* to obtain the time domain resource allocation order.

A target SSB beam i is determined according to the time sequence resource allocation order, and statistics are collected on an average interference status between the neighboring-cell SSB beams j having been allocated on eight time domain resources and the target SSB beam i. A neighboring-cell SSB beam set *Sssb, x* having been allocated on the time domain resource x is acquired. An average interference status between the neighboring-cell SSB beams j having been allocated on the time domain resource x and the target SSB beam i at all the interference levels, i.e., the fourth interference status, is defined as:

$$IntCount\_pair(i, x) = \sum_{j \in Sssb, x} IntCount\_pair(i, j)$$

$x = [s0, s1, \cdots, s7]$, and *IntCount_pair(i,j) = IntCount(i,j) + IntCount(j,i)*. The eight time domain resources are sorted in an ascending order of the fourth interference statuses *IntCount_pair(i,x)* to obtain the time domain resource sequences *Seq*. A first time domain resource which has not been occupied by the cell to which the target SSB beam i belongs in the time domain resource sequences *Seq* is selected and allocated to the target SSB beam i.

In addition, an embodiment of the present disclosure provides a network device, including a processor, a memory, and a computer program stored in the memory and executable by the processor.

The processor and the memory may be connected by a bus or in other ways.

It should be noted that the network device in this embodiment may include the processor and the memory in the embodiment shown in FIG. 1. The two embodiments belong to the same inventive concept and therefore have the same implementation principle and technical effects, so the details will not be repeated here.

The non-transitory software program and instructions required to implement the method for SSB beam resource configuration of the foregoing embodiments are stored in the memory which, when executed by the processor, cause the processor to implement the method for SSB beam resource configuration of the foregoing embodiments.

It should be noted that the network device in the embodiment of the present disclosure can execute the method for SSB beam resource configuration in the above embodiments. Therefore, for implementations and technical effects of the network device in the embodiment of the present disclosure, reference may be made to the implementations and technical effects of the method for SSB beam resource configuration in any one of the above embodiments.

In addition, an embodiment of the present disclosure provides a terminal device, including a processor, a memory, and a computer program stored in the memory and executable by the processor.

The processor and the memory may be connected by a bus or in other ways.

It should be noted that the terminal device in this embodiment may include the processor and the memory in the embodiment shown in FIG. 1. The two embodiments belong to the same inventive concept and therefore have the same implementation principle and technical effects, so the details will not be repeated here.

The non-transitory software program and instructions required to implement the method for SSB beam resource configuration of the foregoing embodiments are stored in the memory which, when executed by the processor, cause the processor to implement the method for SSB beam resource configuration of the foregoing embodiments.

It should be noted that the terminal device in the embodiment of the present disclosure can execute the method for SSB beam resource configuration in the above embodiments. Therefore, for implementations and technical effects of the terminal device in the embodiment of the present disclosure, reference may be made to the implementations and technical effects of the method for SSB beam resource configuration in any one of the above embodiments.

In addition, an embodiment of the present disclosure provides a computer-readable storage medium, storing computer-executable instructions which, when executed by a processor or controller, for example, by a processor in the network device embodiment and/or the terminal device embodiment, may cause the processor to implement the method for SSB beam resource configuration in any one of the above embodiments, for example, implement the method steps S200 to S230 in FIG. 2, the method steps S300 to S330 in FIG. 3, the method step S400 in FIG. 4, the method step S500 in FIG. 5, the method steps S600 to S610 in FIG. 6, the method step S700 in FIG. 7, the method steps S800 to S830 in FIG. 8, the method steps S900 to S930 in FIG. 9, the method steps S1000 to S1010 in FIG. 10, or the method steps S1100 to S1110 in FIG. 11.

According to the embodiments of the present disclosure, a network device acquires interference statuses of a plurality of SSB beams in a target area; sorts the plurality of SSB beams according to the interference statuses to obtain a time domain resource allocation order; traverses and collects statistics on time domain resources in the target area, and obtains a plurality of time domain resource sequences according to the time domain resources, the interference statuses, and the time domain resource allocation order, where each of the time domain resource sequences corresponds to one SSB beam; and performs time domain resource allocation for the plurality of SSB beams according to the time domain resource sequences. The terminal device acquires beam measurement information; and reports the beam measurement information to the network device, such that the network device obtains a plurality of first signal strengths and a plurality of second signal strengths according to the beam measurement information, where each of the first signal strengths is a maximum signal strength among signal strengths of a plurality of SSB beams in a serving cell corresponding to a single terminal device, and each of the second signal strengths is a maximum signal strength among signal strengths of a plurality of SSB beams in a neighboring cell corresponding to the single terminal device, obtains time domain resource sequences according to the first signal strengths and the second signal strengths, and performs time domain resource allocation for the plurality of SSB beams in a target area according to the time domain resource sequences. The terminal device acquires beam measurement information, and the network device obtains a plurality of first signal strengths and a plurality of second signal strengths according to the beam measurement information, acquires interference statuses of a plurality of SSB beams in a target area according to the plurality of first signal strengths and the plurality of second signal strengths, and sorts the plurality of SSB beams according to the interference statuses to obtain a time domain resource allocation order, i.e., an SSB beam optimization order. As such, the SSB beam with serious interference is preferentially optimized, so as to effectively improve user experience. The network device obtains a plurality of time domain resource sequences according to the time domain resources, the interference statuses, and the time domain resource allocation order, and performs time domain resource allocation for the SSB beams according to the time domain resource sequences. In this way, interference between SSB beams can be effectively reduced, thereby improving user experience and reducing the overall processing complexity.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

Although some embodiments of the present disclosure have been described above, the present disclosure is not limited to the embodiments described above. Those having ordinary skills in the art can make various equivalent modifications or replacements without departing from the essence of the present disclosure. Such equivalent modifications or replacements fall within the scope defined by the claims of the present disclosure.

**Claims**

1. A method for Synchronization Signal/PBCH Block (SSB) beam resource configuration, applied to a network device, the method comprising:

    acquiring interference statuses of a plurality of SSB beams in a target area;
    sorting the plurality of SSB beams according to the interference statuses to obtain a time domain resource allocation order;
    traversing and collecting statistics on time domain resources in the target area, and obtaining a plurality of time domain resource sequences according to the time domain resources, the interference statuses, and the time domain resource allocation order, wherein each of the time domain resource sequences corresponds to one SSB beam; and
    performing time domain resource allocation for the plurality of SSB beams according to the time domain resource sequences.

2. The method for SSB beam resource configuration of claim 1, wherein the target area comprises a plurality of cells, and the cells comprise a serving cell and a neighboring cell; and before acquiring interference statuses of a plurality of SSB beams in a target area, the method further comprises:

    acquiring beam measurement information reported by a plurality of terminal devices in the target area, wherein the beam measurement information reported by each of the terminal devices comprises signal strengths of a plurality of the SSB beams in the serving cell corresponding to the terminal device and signal strengths of a plurality of SSB beams in the neighboring cell corresponding to the terminal device;
    obtaining a plurality of first signal strengths and a plurality of second signal strengths according to the beam measurement information, wherein each of the first signal strengths is a maximum signal strength among the signal strengths of the plurality of SSB beams in the serving cell corresponding to a single terminal device, and each of the second signal strengths is a maximum signal strength among the signal strengths of the plurality of SSB beams in the neighboring cell corresponding to the single terminal device;
    acquiring interference levels corresponding to the plurality of terminal devices in the target area, wherein the interference level corresponding to each of the terminal devices is determined according to a difference between the first signal strength and the second signal strength corresponding to the terminal device; and
    counting a number of terminal devices corresponding to each of the interference levels in the target area.

3. The method for SSB beam resource configuration of claim 2, wherein acquiring interference statuses of a plurality of SSB beams in a target area comprises:
   obtaining first interference statuses according to the number of the terminal devices corresponding to each of the interference levels, wherein each of the first interference statuses is an interference status of a single SSB beam corresponding to the interference level.

4. The method for SSB beam resource configuration of claim 3, wherein sorting the plurality of SSB beams according to the interference statuses to obtain a time domain resource allocation order comprises:

    sorting the interference levels to obtain a level sorting result; and
    sorting the plurality of SSB beams in a descending order according to the level sorting result and the first interference statuses to obtain the time domain resource allocation order.

5. The method for SSB beam resource configuration of claim 4, wherein sorting the plurality of SSB beams in a descending order according to the level sorting result and the first interference statuses further comprises:
   in response to the first interference statuses of the plurality of SSB beams corresponding to a first interference level being the same, sorting the plurality of SSB beams in a descending order according to the first interference statuses corresponding to a second interference level, wherein the second interference level is lower than the first interference level.

6. The method for SSB beam resource configuration of claim 4, wherein obtaining a plurality of time domain resource sequences according to the time domain resources, the interference statuses, and the time domain resource allocation order comprises:

determining a target SSB beam according to the time domain resource allocation order;
acquiring, according to the time domain resources, a neighboring-cell SSB beam which has been allocated, wherein the neighboring-cell SSB beam corresponds to the target SSB beam;
acquiring third interference statuses between each of the time domain resources and the target SSB beam, wherein the third interference statuses are interference statuses between the target SSB beam and the neighboring-cell SSB beam which has been allocated in the time domain resources at the interference levels ; and
sorting the time domain resources in an ascending order according to the level sorting result and the third interference statuses to obtain the time domain resource sequences.

7. The method for SSB beam resource configuration of claim 6, wherein sorting the time domain resources in an ascending order according to the level sorting result and the third interference statuses further comprises:
in response to a plurality of third interference statuses corresponding to a second interference level being the same, sorting the plurality of time domain resources in an ascending order according to the third interference statuses corresponding to a first interference level, wherein the second interference level is lower than the first interference level.

8. The method for SSB beam resource configuration of claim 2, wherein acquiring interference statuses of a plurality of SSB beams in a target area further comprises:
performing weighted summation processing according to the numbers of terminal devices corresponding to the interference levels to obtain second interference statuses, wherein each of the second interference statuses is an average interference status of a single SSB beam corresponding to all the interference levels, and each of the interference levels corresponds to one weight parameter.

9. The method for SSB beam resource configuration of claim 8, wherein sorting the plurality of SSB beams according to the interference statuses to obtain a time domain resource allocation order comprises:
sorting the plurality of SSB beams in a descending order according to the second interference statuses to obtain the time domain resource allocation order.

10. The method for SSB beam resource configuration of claim 9, wherein obtaining a plurality of time domain resource sequences according to the time domain resources, the interference statuses, and the time domain resource allocation order comprises:

determining a target SSB beam according to the time domain resource allocation order;
acquiring, according to the time domain resources, a neighboring-cell SSB beam which has been allocated, wherein the neighboring-cell SSB beam corresponds to the target SSB beam;
acquiring fourth interference statuses between each of the time domain resources and the target SSB beam, wherein the fourth interference statuses are average interference statuses between the target SSB beam and the neighboring-cell SSB beam which has been allocated in the time domain resources at all the interference levels; and
sorting the time domain resources in an ascending order according to the fourth interference statuses to obtain the time domain resource sequences.

11. The method for SSB beam resource configuration of claim 6 or 10, wherein performing time domain resource allocation for the plurality of SSB beams according to the time domain resource sequences comprises:

performing filtering processing on the time domain resource sequences to obtain a first time domain resource, wherein the first time domain resource consists of the neighboring-cell SSB beam(s); and
allocating the first time domain resource to the target SSB beam.

12. A method for Synchronization Signal/PBCH Block (SSB) beam resource configuration, applied to a terminal device, the method comprising:

acquiring beam measurement information; and

reporting the beam measurement information to a network device, such that the network device obtains a plurality of first signal strengths and a plurality of second signal strengths according to the beam measurement information, wherein each of the first signal strengths is a maximum signal strength among signal strengths of a plurality of SSB beams in a serving cell corresponding to a single terminal device, and each of the second signal strengths is a maximum signal strength among signal strengths of a plurality of SSB beams in a neighboring cell corresponding to the single terminal device, obtains time domain resource sequences according to the first signal strengths and the second signal strengths, and performs time domain resource allocation for the plurality of SSB beams in a target area according to the time domain resource sequences.

13. A network device, comprising: a memory, a processor, and a computer program stored in the memory and executable by the processor, wherein the computer program, when executed by the processor, causes the processor to perform the method for SSB beam resource configuration of any of claims 1 to 11.

14. A terminal device, comprising: a memory, a processor, and a computer program stored in the memory and executable by the processor, wherein the computer program, when executed by the processor, causes the processor to perform the method for SSB beam resource configuration of claim 12.

15. A computer-readable storage medium, storing computer-executable instructions which, when executed by a computer, cause the computer to perform the method for SSB beam resource configuration of any of claims 1 to 12.

```
                    ┌──────────────┐
            110 ──  │   Processor  │
                    │              │
      Bus           └──────┬───────┘
    ─────────────────┬─────┴──────────────  ──  100
         ┌───────────┴──────┐
         │                  │
         │     Memory   ──  120
         │                  │   System architecture
         └──────────────────┘          platform
```

FIG. 1

```
┌────────────────────────────────────────────┐
│ Acquire interference statuses of a plurality│ ──  S200
│         of SSB beams in a target area        │
└──────────────────────┬─────────────────────┘
                       │
                       ▼
┌────────────────────────────────────────────┐
│     Sort the plurality of SSB beams         │ ──  S210
│  according to the interference statuses to   │
│   obtain a time domain resource allocation   │
│                  order                       │
└──────────────────────┬─────────────────────┘
                       │
                       ▼
┌────────────────────────────────────────────┐
│ Traverse and collect statistics on time      │
│ domain resources in the target area, and      │
│ obtain a plurality of time domain resource    │ ──  S220
│ sequences according to the time domain        │
│ resources, the interference statuses, and     │
│ the time domain resource allocation order,    │
│ where each of the time domain resource        │
│ sequences corresponds to one SSB beam         │
└──────────────────────┬─────────────────────┘
                       │
                       ▼
┌────────────────────────────────────────────┐
│ Perform time domain resource allocation for   │ ──  S230
│  the plurality of SSB beams according to the  │
│       time domain resource sequences          │
└────────────────────────────────────────────┘
```

FIG. 2

Acquire beam measurement information reported by a plurality of terminal devices in the target area ⟋ S300

Obtain a plurality of first signal strengths and a plurality of second signal strengths according to the beam measurement information ⟋ S310

Acquire interference levels corresponding to the plurality of terminal devices in the target area ⟋ S320

Count a number of terminal devices corresponding to each of the interference levels in the target area ⟋ S330

FIG. 3

Obtain first interference statuses according to the number of the terminal devices corresponding to each of the interference levels ⟋ S400

FIG. 4

Perform weighted summation processing according to the numbers of terminal devices corresponding to the interference levels to obtain second interference statuses ⟋ S500

FIG. 5

Sort the interference levels to obtain a level sorting result — S600

Sort the plurality of SSB beams in a descending order according to the level sorting result and the first interference statuses to obtain the time domain resource allocation order — S610

FIG. 6

Sort the plurality of SSB beams in a descending order according to the second interference statuses to obtain the time domain resource allocation order — S700

FIG. 7

Determine a target SSB beam according to the time domain resource allocation order — S800

Acquire, according to the time domain resources, a neighboring-cell SSB beam which has been allocated, where the neighboring-cell SSB beam corresponds to the target SSB beam — S810

Acquire third interference statuses between each of the time domain resources and the target SSB beam — S820

Sort the time domain resources in an ascending order according to the level sorting result and the third interference statuses to obtain the time domain resource sequences — S830

FIG. 8

Determine a target SSB beam according to the time domain resource allocation order — S900

Acquire, according to the time domain resources, a neighboring-cell SSB beam which has been allocated, where the neighboring-cell SSB beam corresponds to the target SSB beam — S910

Acquire fourth interference statuses between each of the time domain resources and the target SSB beam — S920

Sort the time domain resources in an ascending order according to the fourth interference statuses to obtain the time domain resource sequences — S930

FIG. 9

Perform filtering processing on the time domain resource sequences to obtain a first time domain resource, where the first time domain resource consists of the neighboring-cell SSB beam(s) — S1000

Allocate the first time domain resource to the target SSB beam — S1010

FIG. 10

Acquire beam measurement information — S1100

Report the beam measurement information to a network device, such that the network device obtains a plurality of first signal strengths and a plurality of second signal strengths according to the beam measurement information, where each of the first signal strengths is a maximum signal strength among signal strengths of a plurality of SSB beams in a serving cell corresponding to a single terminal device, and each of the second signal strengths is a maximum signal strength among signal strengths of a plurality of SSB beams in a neighboring cell corresponding to the single terminal device, obtains time domain resource sequences according to the first signal strengths and the second signal strengths, and performs time domain resource allocation for the plurality of SSB beams in a target area according to the time domain resource sequences — S1110

FIG. 11

|  |  | Cell 1 |  |  |  |  |  |  |  | Cell 2 |  |  |  |  |  |  |  | Cell 3 |  |  |  |  |  |  |  |
|---|---|---|---|---|---|---|---|---|---|---|---|---|---|---|---|---|---|---|---|---|---|---|---|---|---|
|  |  | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
| Cell 1 | 0 | 0 | 0 | 0 | 0 | 0 | 0 | 0 | 0 | 0 | 0 | 0 | 0 | 0 | 0 | 0 | 1 | 4 | 3 | 1 | 1 | 2 | 5 | 3 | 19 |
|  | 1 | 0 | 0 | 0 | 0 | 0 | 0 | 0 | 0 | 0 | 0 | 0 | 0 | 0 | 0 | 0 | 0 | 1 | 0 | 1 | 0 | 1 | 0 | 0 | 5 |
|  | 2 | 0 | 0 | 0 | 0 | 0 | 0 | 0 | 0 | 0 | 0 | 1 | 0 | 0 | 0 | 0 | 0 | 3 | 1 | 1 | 2 | 0 | 2 | 0 | 9 |
|  | 3 | 0 | 0 | 0 | 0 | 0 | 0 | 0 | 0 | 1 | 0 | 0 | 1 | 0 | 0 | 1 | 3 | 5 | 1 | 3 | 0 | 1 | 0 | 6 | 4 |
|  | 4 | 0 | 0 | 0 | 0 | 0 | 0 | 0 | 0 | 0 | 0 | 0 | 0 | 0 | 0 | 0 | 1 | 1 | 0 | 0 | 3 | 0 | 1 | 5 | 4 |
|  | 5 | 0 | 0 | 0 | 0 | 0 | 0 | 0 | 0 | 0 | 0 | 0 | 0 | 0 | 0 | 0 | 1 | 2 | 0 | 0 | 2 | 5 | 4 | 2 | 2 |
|  | 6 | 0 | 0 | 0 | 0 | 0 | 0 | 0 | 0 | 0 | 0 | 0 | 0 | 0 | 0 | 0 | 2 | 1 | 3 | 1 | 1 | 0 | 1 | 1 | 3 |
|  | 7 | 0 | 0 | 0 | 0 | 0 | 0 | 0 | 0 | 0 | 0 | 0 | 0 | 0 | 0 | 0 | 0 | 1 | 0 | 0 | 0 | 0 | 0 | 2 | 6 |
| Cell 2 | 8 | 0 | 0 | 0 | 0 | 0 | 0 | 0 | 1 | 0 | 0 | 0 | 0 | 0 | 0 | 0 | 0 | 0 | 0 | 0 | 0 | 0 | 0 | 0 | 0 |
|  | 9 | 0 | 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 |
|  | 10 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 |
|  | 11 | 0 | 0 | 0 | 0 | 0 | 0 | 0 | 0 | 0 | 0 | 0 | 0 | 0 | 0 | 0 | 0 | 0 | 0 | 1 | 0 | 0 | 0 | 0 | 0 |
|  | 12 | 0 | 0 | 0 | 1 | 0 | 0 | 0 | 0 | 0 | 0 | 0 | 0 | 0 | 0 | 0 | 0 | 1 | 0 | 0 | 0 | 0 | 0 | 0 | 0 |
|  | 13 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
|  | 14 | 0 | 0 | 0 | 2 | 0 | 0 | 0 | 0 | 0 | 0 | 0 | 0 | 0 | 0 | 0 | 0 | 4 | 1 | 1 | 0 | 2 | 0 | 0 | 1 |
|  | 15 | 3 | 0 | 0 | 4 | 0 | 0 | 0 | 0 | 0 | 0 | 0 | 0 | 0 | 0 | 0 | 0 | 28 | 3 | 1 | 2 | 1 | 2 | 4 | 11 |
| Cell 3 | 16 | 4 | 2 | 1 | 2 | 0 | 1 | 1 | 0 | 8 | 1 | 2 | 7 | 0 | 0 | 4 | 51 | 0 | 0 | 0 | 0 | 0 | 0 | 0 | 0 |
|  | 17 | 1 | 0 | 0 | 0 | 0 | 0 | 1 | 0 | 1 | 0 | 0 | 1 | 0 | 0 | 1 | 6 | 0 | 0 | 0 | 0 | 0 | 0 | 0 | 0 |
|  | 18 | 3 | 1 | 1 | 0 | 0 | 0 | 0 | 0 | 2 | 0 | 0 | 1 | 1 | 1 | 1 | 2 | 0 | 0 | 0 | 0 | 0 | 0 | 0 | 0 |
|  | 19 | 1 | 0 | 0 | 0 | 2 | 0 | 0 | 4 | 1 | 0 | 0 | 0 | 0 | 0 | 0 | 3 | 0 | 0 | 0 | 0 | 0 | 0 | 0 | 0 |
|  | 20 | 2 | 0 | 0 | 2 | 6 | 2 | 0 | 0 | 0 | 0 | 0 | 0 | 0 | 0 | 0 | 0 | 0 | 0 | 0 | 0 | 0 | 0 | 0 | 0 |
|  | 21 | 1 | 0 | 0 | 0 | 1 | 1 | 1 | 2 | 0 | 0 | 0 | 0 | 0 | 0 | 0 | 0 | 0 | 0 | 0 | 0 | 0 | 0 | 0 | 0 |
|  | 22 | 1 | 0 | 0 | 3 | 2 | 1 | 1 | 0 | 1 | 0 | 0 | 0 | 0 | 0 | 1 | 0 | 0 | 0 | 0 | 0 | 0 | 0 | 0 | 0 |
|  | 23 | 7 | 1 | 3 | 1 | 1 | 0 | 0 | 2 | 0 | 0 | 0 | 0 | 1 | 1 | 1 | 0 | 0 | 0 | 0 | 0 | 0 | 0 | 0 | 0 |

FIG. 12

<table>
<tr><td colspan="2">**INTERNATIONAL SEARCH REPORT**</td><td>International application No.<br>**PCT/CN2023/099709**</td></tr>
</table>

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI, IEEE, 3GPP: 同步信息块, 物理广播信道块, 波束, 干扰, 噪声, 时间, 时域, 时隙, 大小, 指数, 程度, 强弱, 强度, 水平, 排序, 顺序, SSB, beam, BM, disturb, noise, interference, SI, SINR, SNR, RSRQ, time

**C. DOCUMENTS CONSIDERED TO BE RELEVANT**

| Category* | Citation of document, with indication, where appropriate, of the relevant passages | Relevant to claim No. |
|---|---|---|
| A | CN 113438662 A (CHINA TELECOM CORP., LTD.) 24 September 2021 (2021-09-24) description, paragraphs [0034]-[0096] | 1-15 |
| A | CN 103369539 A (HUAWEI TECHNOLOGIES CO., LTD.) 23 October 2013 (2013-10-23) entire document | 1-15 |
| A | CN 110944346 A (RESEARCH INSTITUTE OF CHINA MOBILE COMMUNICATIONS CORP. et al.) 31 March 2020 (2020-03-31) entire document | 1-15 |
| A | WO 2022059812 A1 (LG ELECTRONICS INC.) 24 March 2022 (2022-03-24) entire document | 1-15 |
| A | CMCC. "RP-182510, Status Report for SI on remote interference management for NR" *3GPP TSG RAN meeting#82,* 03 December 2018 (2018-12-03), entire document | 1-15 |

☐ Further documents are listed in the continuation of Box C.   ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 August 2023** | **04 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/099709**

| Patent document cited in search report | | | Publication date (day/month/year) | Patent family member(s) | | | Publication date (day/month/year) |
|---|---|---|---|---|---|---|---|
| CN | 113438662 | A | 24 September 2021 | None | | | |
| CN | 103369539 | A | 23 October 2013 | JP | 2015518677 | A | 02 July 2015 |
| | | | | WO | 2013149593 | A1 | 10 October 2013 |
| | | | | EP | 2824984 | A1 | 14 January 2015 |
| | | | | US | 2015016434 | A1 | 15 January 2015 |
| CN | 110944346 | A | 31 March 2020 | None | | | |
| WO | 2022059812 | A1 | 24 March 2022 | KR | 20230069107 | A | 18 May 2023 |

Form PCT/ISA/210 (patent family annex) (July 2022)

**REFERENCES CITED IN THE DESCRIPTION**

**Patent documents cited in the description**

- CN 202210668003